# EUROPÄISCHE PATENTSCHRIFT

(11) **EP 3 359 429 B1**
(45) Veröffentlichungstag und Bekanntmachung des Hinweises auf die Patenterteilung: **09.10.2019**
(21) Anmeldenummer: 16760687.0
(22) Anmeldetag: 30.08.2016
(51) Int. Cl.: B60T 8/00

(54) **VERFAHREN ZUM ANSTEUERN EINES ELEKTROMAGNETVENTILS UND KORRESPONDIERENDES FLUIDSYSTEM**
METHOD FOR ACTUATING AN ELECTROMAGNETIC VALVE, AND CORRESPONDING FLUID SYSTEM
PROCÉDÉ D'ACTIVATION D'UNE SOUPAPE ÉLECTROMAGNÉTIQUE ET SYSTÈME FLUIDIQUE ASSOCIÉ

(30) Priorität: 08.10.2015 DE 102015219506
(43) Veröffentlichungstag der Anmeldung: 15.08.2018
(73) Patentinhaber: Robert Bosch GmbH, 70442 Stuttgart (DE)
(72) Erfinder: MUELLER, Bjoern-Michael, 74199 Untergruppenbach (DE); BLANKENHORN, Ulrich, 71723 Grossbottwar (DE); EDELMANN, Volker, 74722 Buchen (DE); MAERZ, Manfred, 71636 Ludwigsburg (DE); GARDT, Andrej, 74232 Abstatt (DE); SCHUBITSCHEW, Valentin, 71732 Tamm (DE)
(86) Internationale Anmeldenummer: PCT/EP2016/070364
(87) Internationale Veröffentlichungsnummer: WO 2017/060008

(56) Entgegenhaltungen:
- EP-A2- 0 929 020
- DE-A1- 4 024 496
- DE-A1-102004 018 191

## Beschreibung

Die Erfindung geht aus von einem Verfahren zum Ansteuern eines Elektromagnetventils der Gattung des unabhängigen Patentanspruchs 1. Die Erfindung geht aus von und von einem Fluidsystem nach Gattung der unabhängigen Patentansprüche. Gegenstand der vorliegenden Erfindung sind auch ein Fluidsystem und ein Computerprogramm zur Durchführung des Verfahrens.

Aus dem Stand der Technik sind zahlreiche Verfahren zum Ansteuern von Elektromagnetventilen, insbesondere von stromlos geschlossenen Hochdruckschaltventilen bekannt. Ein solches Elektromagnetventil dient als technisches Bauteil dazu, den Einlass und/oder Auslass von Fluiden, wie beispielsweise Gasen oder Flüssigkeiten, zu kontrollieren oder die Fließrichtung zu steuern und/oder zu regeln. Typischerweise wird ein stromlos geschlossenes Ventil zum Öffnen kurz mit einem hohen Schaltstrom angesteuert. Wenn das Ventil offen ist, kann der Strom auf einen kleineren Haltestrom abgesenkt werden, da aufgrund eines kleineren Restluftspaltes eine größere magnetische Kraft bei gleichem Strom wirkt. Elektromagnetventile, insbesondere Elektromagnetventile mit Spaltfilterung, können ein temperaturabhängiges Funktionsverhalten aufweisen, so dass unter ungünstigen Randbedingungen Probleme mit dem Schaltverhalten auftreten können.

Aus der DE 10 2004 018 191 A1 ist ein Verfahren zum Ansteuern eines zweistufigen Schaltventils bekannt. Das Schaltventil umfasst eine erste Stufe mit kleinem Durchflussquerschnitt und eine zweite Stufe mit größerem Durchflussquerschnitt und ist in einem hydraulischen Bremssystem zwischen einem Hauptbremszylinder und einer Hydraulikpumpe angeordnet. Der Druckausgleichsschlag kann verringert werden, wenn das Schaltventil in einer ersten Phase mit einem Steuersignal mit kleiner Amplitude angesteuert wird, um zuerst nur die Vorstufe des Schaltventils für eine vorgegebene Zeitdauer zu öffnen, und in einer zweiten Phase mit einem Steuersignal mit größerer Amplitude angesteuert wird, um sicherzustellen, dass die Hauptstufe des Ventils vollständig öffnet. Das Öffnungsverhalten des Ventils ist in der Regel stark spannungs- und temperaturabhängig, daher wird das Ansteuersignal für das Ventil vorzugsweis spannungs- und/oder temperaturkompensiert. Die am Ventil tatsächlich anliegende Spannung kann beispielsweise gemessen und die Spulentemperatur geschätzt werden. Die Signalamplitude wird nach einer weiteren Zeitdauer wird auf ein niedrigeres Niveau zurückgefahren, welches ausreichend ist das Ventil geöffnet zu halten und eine Überhitzung des Ventils zu vermeiden.

### Offenbarung der Erfindung

Das Verfahren zum Ansteuern eines Elektromagnetventils und das Fluidsystem mit den Merkmalen der unabhängigen Patentansprüche haben den Vorteil, dass die Gewährleistung der Ventilfunktion über den gesamten Temperaturbereich des eingesetzten Fluids mittels einer geeigneten Ansteuerung bzw. Bestromung des Elektromagnetventils möglich ist. Dies gilt für das schnelle und auch das normale Schalten des Elektromagnetventils.

Der Kern der Erfindung liegt einem temperaturabhängigen elektrischen Stromprofil zum Schalten bzw. zum Halten des Schaltzustands des Ventils. Das bedeutet, dass der Schaltstrom und der Haltestrom des Elektromagnetventils als Funktion von mindestens einer Temperaturinformation vorgegeben werden. Elektromagnetventile können insbesondere aufgrund der Fluidviskosität ein temperaturabhängiges Schaltverhalten aufweisen. Konkret heißt das, dass bei tiefen Temperaturen und hoher Fluidviskosität aufgrund von Druckabfällen im Elektromagnetventil andere Kräftegleichgewichte herrschen können als bei hohen Temperaturen. So können als typische Kräfte bei stromlos geschlossenen Elektromagnetventilen die Magnetkraft einer Elektromagnetbaugruppe als öffnende Kraft und die Federkraft einer Rückstellfeder, hydraulische Kräfte und zusätzliche temperaturabhängige hydraulische Kräfte durch viskose Druckabfälle als schließende Kräfte auftreten. In diesem Fall werden die schließenden Kräfte bei hoher Viskosität größer, so dass bei Kälte ein höherer Schaltstrom zum Öffnen des Ventils erforderlich ist. Diese hohen elektrischen Ströme könnten bei hohen Fluid- und Umgebungstemperaturen und gleichzeitig langen Bestromungszeiten zu unzulässig hohen Bauteiltemperaturen in der Elektromagnetbaugruppe und in einer Treiberschaltung einer Auswerte- und Steuereinheit führen und diese zerstören. Deshalb sollen die hohen Ströme nur bei tiefen Temperaturen gestellt werden. Bei hohen Temperaturen ist der viskose Einfluss sehr gering, so dass zum Schutz der Bauteile vor Überhitzung die Schaltstromamplitude und die Haltestromamplitude abgesenkt werden können.

So können bei tiefen Temperaturen eine hohe Schaltstromamplitude und eine hohe Haltestromamplitude vorgegeben werden, damit das Elektromagnetventil schaltet bzw. geschaltet bleibt. Bei hohen Temperaturen können eine niedrigere Schaltstromamplitude und eine niedrigere Haltestromamplitude vorgegeben werden, damit das Elektromagnetventil schaltet bzw. geschaltet bleibt und die Bauteile nicht überhitzt werden. So kann beispielsweise für einen oberen Temperaturgrenzwert eine erste Stromkennlinie mit einer ersten Schaltstromamplitude und einer ersten Haltestromamplitude vorgegeben werden, und für einen unteren Temperaturgrenzwert kann eine zweite Stromkennlinie mit einer zweiten Schaltstromamplitude und einer zweiten Haltestromamplitude vorgegeben werden. Die Temperaturgrenzwerte für die Unterscheidung von niedriger oder hoher Bestromung können entweder über Rechenmodelle, Widerstandsmessungen oder Temperatursensoren bestimmt bzw. gemessen werden. Es können beispielsweise auch mehr als die zwei Temperaturgrenzwerte unterschieden werden, um eine feinere Abstufung zu erreichen. Durch mehrere Temperaturbereiche kann in vorteilhafter Weise eine noch optimalere Bestromung des Elektromagnetventils erreicht werden, d.h. dass die Schaltstromamplitude und die Haltestromamplitude gerade so groß gewählt werden, wie zum Schalten und Halten des Elektromagnetventils erforderlich ist. Ist die Temperaturerfassung sehr genau, können die Stromvorgaben sogar über temperaturabhängige Stromstützstelinterpoliert werden.

Ausführungsformen der Erfindung ermöglichen in vorteilhafter Weise die Gewährleistung der Ventilfunktionen über den gesamten Temperaturbereich ohne die Lebensdauer der Bauteile negativ zu beeinflussen. So kann auch der physikalische Effekt genutzt werden, dass bei tiefen Temperaturen aufgrund der niedrigeren ohmschen Widerstände ein viel größerer Strom bei gleicher Spannung erzeugt werden kann.

Ausführungsformen der vorliegenden Erfindung stellen ein Verfahren zum Ansteuern eines Elektromagnetventils in einem Fluidsystem zur Verfügung. Hierbei wird für eine vorgegebene erste Zeitspanne ein Schaltstrom mit einer vorgegebenen ersten Amplitude angelegt, welcher das Elektromagnetventil von einem Ruhezustand in einen Schaltzustand schaltet. Nach Ablauf der vorgegebenen ersten Zeitspanne wird ein Haltestrom mit einer vorgegebenen zweiten Amplitude angelegt, welcher das Elektromagnetventil im Schaltzustand hält, wobei die erste Amplitude des Schaltstroms größer als die zweite Amplitude des Haltestroms ist. Hierbei werden die erste Amplitude des Schaltstroms und die zweite Amplitude des Haltestroms in Abhängigkeit von mindestens einer Temperaturinformation vorgegeben.

Des Weiteren wird ein Fluidsystem mit mindestens einem Elektromagnetventil und einer Auswerte- und Steuereinheit nach Anspruch 8 vorgeschlagen, welche für eine vorgegebene erste Zeitspanne einen Schaltstrom mit einer vorgegebenen ersten Amplitude an das Elektromagnetventil anlegt, welcher das Elektromagnetventil von einem Ruhezustand in einen Schaltzustand schaltet. Die Auswerte- und Steuereinheit legt nach Ablauf der vorgegebenen ersten Zeitspanne einen Haltestrom mit einer vorgegebenen zweiten Amplitude an das Elektromagnetventil an, welche das Elektromagnetventil im Schaltzustand hält, wobei die erste Amplitude des Schaltstroms größer als die zweite Amplitude des Haltestroms ist. Hierbei gibt die Auswerte- und Steuereinheit die erste Amplitude des Schaltstroms und die zweite Amplitude des Haltestroms in Abhängigkeit von mindestens einer Temperaturinformation vor.

Unter der Auswerte- und Steuereinheit kann vorliegend ein elektrisches Gerät, wie beispielsweise ein Steuergerät, insbesondere ein Steuergerät für ein Fahrzeugbremssystem mit einer ABS- und/oder ESP-Funktionalität, verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogramm mit Programmcode, der auf einem maschinenlesbaren Speichermedium, wie einem Halbleiterspeicher, einem Festplattenspeicher oder einem optischen Speicher gespeichert ist und zur Durchführung des Verfahrens zum Ansteuern eines Elektromagnetventils verwendet wird, wenn das Programm von der Auswerte- und Steuereinheit ausgeführt wird.

Unter einer Sensoreinheit wird vorliegend eine Baueinheit verstanden, welche mindestens ein Sensorelement umfasst, welches eine physikalische Größe bzw. eine Änderung einer physikalischen Größe direkt oder indirekt erfasst und vorzugsweise in ein elektrisches Sensorsignal umwandelt.

Durch die in den abhängigen Ansprüchen aufgeführten Maßnahmen und Weiterbildungen sind vorteilhafte Verbesserungen des im unabhängigen Patentanspruch 1 angegebenen Verfahrens zum Ansteuern eines Elektromagnetventilsund des im unabhängigen Patentanspruch 8 angegebenen Fluidsystems möglich.

Besonders vorteilhaft ist, dass die erste Zeitspanne des Schaltstroms in Abhängigkeit von mindestens einer Temperaturinformation vorgegeben werden kann.

So kann die erste Zeitspanne bei tiefen Temperaturen und hoher Fluidviskosität länger als bei hohen Temperaturen und niedriger Fluidviskosität vorgegeben werden. Das bedeutet, dass das Elektromagnetventil länger mit der Schaltstromamplitude angesteuert wird. Bei hohen Temperaturen ist der viskose Einfluss sehr gering, so dass die erste Zeitspanne zum Schutz der Bauteile vor Überhitzung gekürzt und das Elektromagnetventil kürzer mit der Schaltstromamplitude angesteuert wird.

In vorteilhafter Ausgestaltung des erfindungsgemäßen Verfahrens kann die mindestens eine Temperaturinformation beispielsweise eine Information über eine Fluidtemperatur im Fluidsystem und/oder eine Information über eine Umgebungstemperatur und/oder eine Information über eine Antriebsaggregattemperatur und/oder eine Information über eine Bauteiltemperatur umfassen. Diese Informationen können der Auswerte- und Steuereinheit beispielsweise über einen Temperatursensor und/oder über ein Bussystem von anderen Fahrzeugbaugruppen zur Verfügung gestellt werden.

In weiterer vorteilhafter Ausgestaltung des erfindungsgemäßen Verfahrens kann der Schaltstrom sprunghaft von einem Ausgangswert auf die erste Amplitude erhöht werden. Dadurch kann eine dynamische Ansteuerung des Elektromagnetventils umgesetzt werden, welche ein schnelles Schalten des Elektromagnetventils ermöglicht. Alternativ kann der Schaltstrom stufenweise von einem Ausgangswert auf die erste Amplitude erhöht werden.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines Ausschnitts eines Ausführungsbeispiels eines erfindungsgemäßen Fluidsystems.
Fig. 2 zeigt ein schematisches Kennliniendiagramm mit zwei temperaturabhängigen Stromkennlinien, welche von einem Ausführungsbeispiel eines erfindungsgemäßen Verfahrens zum Ansteuern eines Elektromagnetventils des erfindungsgemäßen Fluidsystems aus Fig. 1 erzeugt werden.
Fig. 3 zeigt ein schematisches Kennliniendiagramm mit zwei weiteren temperaturabhängigen Stromkennlinien, welche von einem Ausführungsbeispiel eines erfindungsgemäßen Verfahrens zum Ansteuern eines Elektromagnetventils des erfindungsgemäßen Fluidsystems aus Fig. 1 erzeugt werden.

### Ausführungsformen der Erfindung

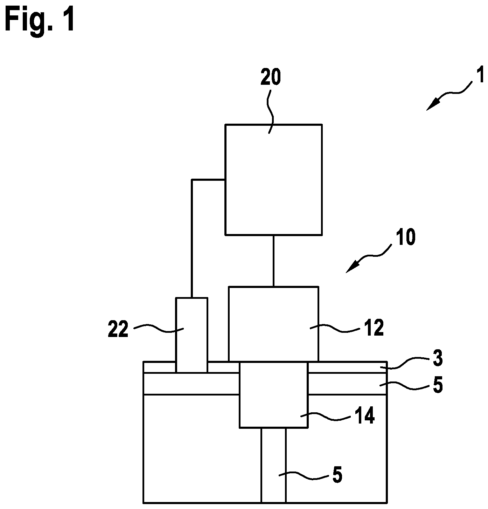

Wie aus Fig. 1 ersichtlich ist, umfasst das dargestellte Ausführungsbeispiel eines erfindungsgemäßen Fluidsystems 1 mindestens ein Elektromagnetventil 10 und eine Auswerte- und Steuereinheit 20. Der dargestellte Ausschnitt des Fluidsystems 1 zeigt beispielhaft ein Elektromagnetventil 10 mit einer Magnetbaugruppe 12 und einer Ventilpatrone 14, welche im dargestellten Ausführungsbeispiel in einen Fluidblock 3 eingeschraubt ist, welcher mehrere Fluidkanäle 5 aufweist. Zudem ist im dargestellten Ausführungsbeispiel ist ein Temperatursensor 22 in den Fluidblock 3 eingeschraubt, welcher eine Fluidtemperatur misst und der Auswerte- und Steuereinheit 20 eine Information über die Fluidtemperatur als mindestens eine Temperaturinformation zur Verfügung stellt. Zudem können weitere nicht dargestellte Temperatursensoren und/oder Fahrzeugsysteme eingesetzt werden, welche der Auswerte- und Steuereinheit 20 weitere Temperaturinformationen wie, beispielsweise eine Information über eine Umgebungstemperatur und/oder eine Information über eine Antriebsaggregattemperatur und/oder eine Information über eine Bauteiltemperatur der Magnetbaugruppe 12 oder einer Treiberschaltung zur Verfügung stellt, welche den Strom zur Ansteuerung des Elektromagnetventils 10 erzeugt und ausgibt.

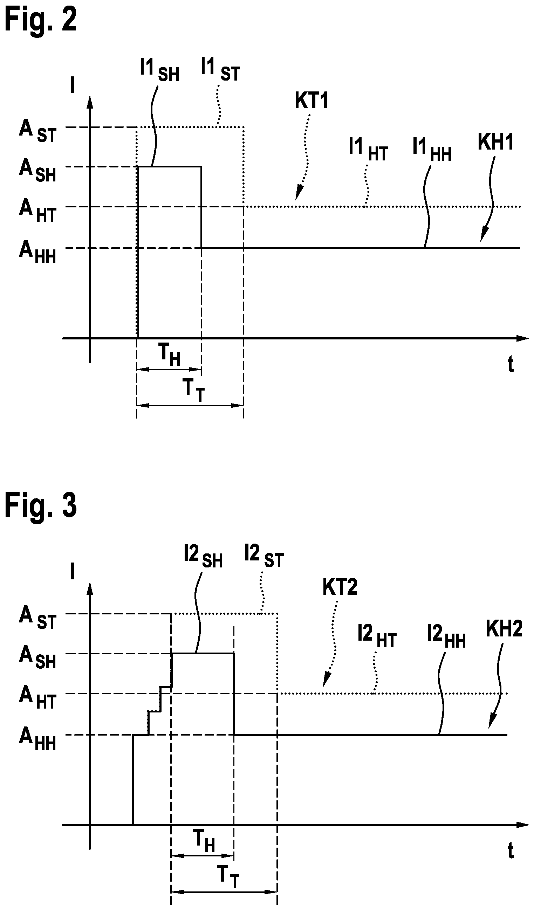

Wie aus Fig. 1 bis 3 weiter ersichtlich ist, legt die Auswerte- und Steuereinheit 20 für eine vorgegebene erste Zeitspanne T_{H}, T_{T} einen Schaltstrom I1_{SH}, I2_{SH}, I1_{ST}, I2_{ST} mit einer vorgegebenen ersten Amplitude A_{SH}, A_{ST} an das Elektromagnetventil 10 an. Der Schaltstrom I1_{SH}, I2_{SH}, I1_{ST}, I2_{ST} schaltet das Elektromagnetventil 10 von einem Ruhezustand in einen Schaltzustand. Nach Ablauf der vorgegebenen ersten Zeitspanne T_{H}, T_{T} legt die Auswerte- und Steuereinheit 20 einen Haltestrom I1_{HH}, I2_{HH}, I1_{HT}, I2_{HT} mit einer vorgegebenen zweiten Amplitude A_{HH}, A_{HT} an das Elektromagnetventil 10 an. Der Haltestrom I1_{HH}, I2_{HH}, I1_{HT}, I2_{HT} hält das Elektromagnetventil 10 im Schaltzustand. Wie aus Fig. 2 und 3 weiter ersichtlich ist, ist die erste Amplitude A_{SH}, A_{ST} des Schaltstroms I1_{SH}, I2_{SH}, I1_{ST}, I2_{ST} größer als die zweite Amplitude A_{HH}, A_{HT} des Haltestroms I1_{HH}, I2_{HH}, I1_{HT}, I2_{HT}. Die Auswerte- und Steuereinheit 20 gibt die erste Amplitude A_{SH}, A_{ST} des Schaltstroms I1_{SH}, I2_{SH}, I1_{ST}, I2_{ST} und die zweite Amplitude A_{HH}, A_{HT} des Haltestroms I1_{HH}, I2_{HH}, I1_{HT}, I2_{HT} in Abhängigkeit von mindestens einer Temperaturinformation vor.

Wie aus Fig. 2 und 3 weiter ersichtlich ist, gibt die Auswerte- und Steuereinheit 20 im dargestellten Ausführungsbeispiel auch die erste Zeitspanne T_{H}, T_{T} des Schaltstroms I1_{SH}, I2_{SH}, I1_{ST}, I2_{ST} in Abhängigkeit von der mindestens einen Temperaturinformation vor.

Das Fluidsystem 1 kann beispielsweise als ABS/TCS/ESP-System ausgeführt werden, wobei das Elektromagnetventil 10 insbesondere als stromlos geschlossenes Hochdruckschaltventil ausgeführt werden kann. Das Elektromagnetventil 10 dient als technisches Bauteil dazu, den Ein- oder Auslass von Gasen oder Flüssigkeiten zu kontrollieren oder die Fließrichtung zu steuern bzw. zu regeln. Typischerweise wird ein stromlos geschlossenes Ventil zum Öffnen kurz mit dem hohen Schaltstroms I1_{SH}, I2_{SH}, I1_{ST}, I2_{ST} angesteuert. Wenn das Ventil offen ist, kann der Schaltstroms I1_{SH}, I2_{SH}, I1_{ST}, I2_{ST} wegen des kleineren Restluftspaltes auf den Haltestrom I1_{HH}, I2_{HH}, I1_{HT}, I2_{HT} abgesenkt werden. Bei den bekannten Ansteuerverfahren werden zwei verschiedene Ansteuerungsarten abhängig von der Dynamikanforderung dargestellt. Zur dynamischen Ansteuerung wird der Schaltstrom I1_{SH}, I1_{ST} sprungförmig erhöht, bei einer normalen Ansteuerung wird der Schaltstrom I2_{SH}, I2_{ST} stufenförmig erhöht. Die Amplitude des Schaltstroms I1_{SH}, I2_{SH}, I1_{ST}, I2_{ST} ist in beiden Fällen gleich.

Wie aus Fig. 2 weiter ersichtlich ist, wird bei hohen Temperaturen gemäß der dargestellten durchgezogenen ersten Stromkennlinie KH1 für eine vorgegebene erste Zeitspanne T_{H}, ein erster Schaltstrom I1_{SH} sprunghaft mit einer vorgegebenen ersten Amplitude A_{SH} angelegt, welcher das Elektromagnetventil 10 von einem Ruhezustand, welcher im dargestellten Ausführungsbeispiel einem Stromwert von 0 A entspricht, schnell in einen Schaltzustand schaltet, welcher der ersten Amplitude A_{SH} des Schaltstroms I1_{SH} entspricht. Nach Ablauf der vorgegebenen ersten Zeitspanne T_{H} wird ein erster Haltestrom I1_{HH} mit einer vorgegebenen zweiten Amplitude A_{HH} angelegt, welcher das Elektromagnetventil 10 im Schaltzustand hält. Wie aus Fig. 2 weiter ersichtlich ist, ist die erste Amplitude A_{SH} des ersten Schaltstroms I1_{SH} größer als die zweite Amplitude A_{HH} des ersten Haltestroms I1_{HH}.

Wie aus Fig. 2 weiter ersichtlich ist, wird bei niedrigen Temperaturen gemäß der dargestellten gepunkteten zweiten Stromkennlinie KT1 für eine vorgegebene erste Zeitspanne T_{T}, welche im dargestellten Ausführungsbeispiel länger als die erste Zeitspanne T_{H} bei hohen Temperaturen ist, ein erster Schaltstrom I1_{ST} sprunghaft mit einer vorgegebenen ersten Amplitude A_{ST} angelegt, welche größer als die erste Amplitude A_{SH} bei hohen Temperaturen ist. Durch den höheren ersten Schaltstrom I1_{ST} wird das Elektromagnetventil 10 auch bei tiefen Temperaturen schnell vom Ruhezustand in den Schaltzustand geschaltet, welcher der ersten Amplitude A_{ST} des ersten Schaltstroms I1_{ST} bei tiefen Temperaturen entspricht. Nach Ablauf der vorgegebenen längeren ersten Zeitspanne T_{T} wird ein erster Haltestrom I1_{HT} mit einer vorgegebenen zweiten Amplitude A_{HT} angelegt, welche größer als die zweite Amplitude A_{ST} bei hohen Temperaturen ist. Durch den höheren ersten Haltestrom I1_{HT} wird das Elektromagnetventil 10 auch bei tiefen Temperaturen im Schaltzustand gehalten. Wie aus Fig. 2 weiter ersichtlich ist, ist die erste Amplitude A_{ST} des ersten Schaltstroms I1_{ST} auch bei tieferen Temperaturen größer als die zweite Amplitude A_{HT} des ersten Haltestroms I1_{HT}.

Wie aus Fig. 3 weiter ersichtlich ist, wird bei hohen Temperaturen gemäß der dargestellten durchgezogenen zweiten Stromkennlinie KH2 für eine vorgegebene erste Zeitspanne T_{H}, ein zweiter Schaltstrom I2_{SH} mit einer vorgegebenen ersten Amplitude A_{SH} an das Elektromagnetventil 10 angelegt. Im Unterschied zu den Stromkennlinien KH1, KT1 aus Fig. 2, welche sprunghaft vom Ausgangsstromwert von 0 A auf die erste Amplitude A_{SH} des Schaltstroms I1_{SH} ansteigen, steigen die Stromkennlinien KH2, KT2 aus Fig. 3 stufenweise vom Ausgangsstromwert von 0 A auf die erste Amplitude A_{SH} des Schaltstroms I1_{SH} an, wobei im dargestellten Ausführungsbeispiel drei Zwischenstufen vorgesehen sind. Dadurch wird das Elektromagnetventil 10 langsamer vom Ruhezustand, welcher im dargestellten Ausführungsbeispiel einem Stromwert von 0 A entspricht, in einen Schaltzustand geschaltet, welcher der ersten Amplitude A_{SH} des zweiten Schaltstroms I2_{SH} entspricht. Nach Ablauf der vorgegebenen ersten Zeitspanne T_{H} wird ein zweiter Haltestrom I2_{HH} mit einer vorgegebenen zweiten Amplitude A_{HH} angelegt, welcher das Elektromagnetventil 10 im Schaltzustand hält. Wie aus Fig. 3 weiter ersichtlich ist, ist die erste Amplitude A_{SH} des zweiten Schaltstroms I2_{SH} größer als die zweite Amplitude A_{HH} des zweiten Haltestroms I2_{HH}.

Wie aus Fig. 3 weiter ersichtlich ist, wird analog zu Fig. 2 bei niedrigen Temperaturen gemäß der dargestellten gepunkteten zweiten Stromkennlinie KT2 für eine vorgegebene erste Zeitspanne T_{T}, welche im dargestellten Ausführungsbeispiel länger als die erste Zeitspanne T_{H} bei hohen Temperaturen ist, ein zweiter Schaltstrom I2_{ST} mit einer vorgegebenen ersten Amplitude A_{ST} angelegt, welche größer als die erste Amplitude A_{SH} bei hohen Temperaturen ist. Durch den höheren zweiten Schaltstrom I2_{ST} wird das Elektromagnetventil 10 auch bei tiefen Temperaturen vom Ruhezustand in den Schaltzustand geschaltet, welcher der ersten Amplitude A_{ST} des zweiten Schaltstroms I2_{ST} bei tiefen Temperaturen entspricht. Nach Ablauf der vorgegebenen längeren ersten Zeitspanne T_{T} wird ein zweiter Haltestrom I2_{HT} mit einer vorgegebenen zweiten Amplitude A_{HT} angelegt, welche größer als die zweite Amplitude A_{ST} bei hohen Temperaturen ist. Durch den höheren zweiten Haltestrom I2_{HT} wird das Elektromagnetventil 10 auch bei tiefen Temperaturen im Schaltzustand gehalten. Wie aus Fig. 3 weiter ersichtlich ist, ist die erste Amplitude A_{ST} des zweiten Schaltstroms I2_{ST} auch bei tieferen Temperaturen größer als die zweite Amplitude A_{HT} des zweiten Haltestroms I2_{HT}.

Somit werden bei den beschriebenen Ausführungsbeispielen die erste Amplitude A_{SH}, A_{ST} des Schaltstroms I1_{SH}, I2_{SH}, I1_{ST}, I2_{ST} und die zweite Amplitude A_{HH}, A_{HT} des Haltestroms I1_{HH}, I2_{HH}, I1_{HT}, I2_{HT} in Abhängigkeit von mindestens einer Temperaturinformation vorgegeben. Zudem wird bei den beschriebenen Ausführungsbeispielen auch die erste Zeitspanne T_{H}, T_{T} des Schaltstroms I1_{SH}, I2_{SH}, I1_{ST}, I2_{ST} in Abhängigkeit von mindestens einer Temperaturinformation vorgegeben. Die mindestens eine Temperaturinformation umfasst beispielsweise eine Information über eine Fluidtemperatur im Fluidsystem 1 und/oder eine Information über eine Umgebungstemperatur und/oder eine Information über eine Antriebsaggregattemperatur und/oder eine Information über eine Bauteiltemperatur.

Bei den dargestellten Ausführungsbeispiel werden zwei Temperaturgrenzwerte für die Unterscheidung von niedriger oder hoher Bestromung vorgegeben, welche entweder über Rechenmodelle, Widerstandsmessungen oder Temperatursensoren bestimmt bzw. gemessen werden können. Es können selbstverständlich auch mehr als die zwei Temperaturgrenzwerte unterschieden werden, um eine feinere Abstufung zu erreichen. Durch mehrere Temperaturbereiche kann in vorteilhafter Weise eine noch optimalere Bestromung des Elektromagnetventils 10 erreicht werden, d.h. dass die Schaltstromamplitude A_{SH}, A_{ST} und die Haltestromamplitude A_{HH}, A_{HT} gerade so groß gewählt werden, wie zum Schalten und Halten des Elektromagnetventils 10 erforderlich ist. Ist die Temperaturerfassung sehr genau, können die Stromvorgaben sogar über temperaturabhängige Stromstützstellen interpoliert werden.

Ausführungsformen der vorliegenden Erfindung stellen ein Verfahren zum Ansteuern eines Elektromagnetventils in einem Fluidsystem zur Verfügung, welches in vorteilhafter Weise die Ventilfunktion über den gesamten Temperaturbereich mittels einer geeigneten Ansteuerung bzw. Bestromung ermöglicht ohne die Lebensdauer der Bauteile negativ zu beeinflussen. Kern der Erfindung ist ein temperaturabhängiges elektrisches Stromprofil zum Schalten bzw. Halten des Ventils.

## Patentansprüche

1. Verfahren zum Ansteuern eines Elektromagnetventils (10) in einem Fluidsystem (1), wobei für eine vorgegebene erste Zeitspanne (T_{H}, T_{T}) ein Schaltstrom (I1_{SH}, I2_{SH}, I1_{ST}, I2_{ST}) mit einer vorgegebenen ersten Amplitude (A_{SH}, A_{ST}) angelegt wird, welcher das Elektromagnetventil (10) von einem Ruhezustand in einen Schaltzustand schaltet, wobei nach Ablauf der vorgegebenen ersten Zeitspanne (T_{H}, T_{T}) ein Haltestrom (I1_{HH}, I2_{HH}, I1_{HT}, I2_{HT}) mit einer vorgegebenen zweiten Amplitude (A_{HH}, A_{HT}) angelegt wird, welcher das Elektromagnetventil (10) im Schaltzustand hält, wobei die erste Amplitude (A_{SH}, A_{ST}) des Schaltstroms (I1_{SH}, I2_{SH}, I1_{ST}, I2_{ST}) größer als die zweite Amplitude (A_{HH}, A_{HT}) des Haltestroms (I1_{HH}, I2_{HH}, I1_{HT}, I2_{HT}) ist, **dadurch gekennzeichnet, dass** die erste Amplitude (A_{SH}, A_{ST}) des Schaltstroms (I1_{SH}, I2_{SH}, I1_{ST}, I2_{ST}) und die zweite Amplitude (A_{HH}, A_{HT}) des Haltestroms (I1_{HH}, I2_{HH}, I1_{HT}, I2_{HT}) in Abhängigkeit von mindestens einer Temperaturinformation vorgegeben wird.

2. Verfahren nach Anspruch 1, **dadurch gekennzeichnet, dass** die erste Zeitspanne (T_{H}, T_{T}) des Schaltstroms (I1_{SH}, I2_{SH}, I1_{ST}, I2_{ST}) in Abhängigkeit von mindestens einer Temperaturinformation vorgegeben wird.

3. Verfahren nach Anspruch 1 oder 2, **dadurch gekennzeichnet, dass** die mindestens eine Temperaturinformation eine Information über eine Fluidtemperatur im Fluidsystem (1) und/oder eine Information über eine Umgebungstemperatur und/oder eine Information über eine Antriebsaggregattemperatur und/oder eine Information über eine Bauteiltemperatur umfasst.

4. Verfahren nach einem der Ansprüche 1 bis 3, **dadurch gekennzeichnet, dass** die erste Amplitude (A_{SH}, A_{ST}) des Schaltstroms (I1_{SH}, I2_{SH}, I1_{ST}, I2_{ST}) und die zweite Amplitude (A_{HH}, A_{HT}) des Haltestroms (I1_{HH}, I2_{HH}, I1_{HT}, I2_{HT}) bei niedrigen Temperaturen jeweils mit höheren Werten als bei hohen Temperaturen vorgegeben werden.

5. Verfahren nach einem der Ansprüche 2 bis 4, **dadurch gekennzeichnet, dass** die erste Zeitspanne (T_{H}, T_{T}) des Schaltstroms (I1_{SH}, I2_{SH}, I1_{ST}, I2_{ST}) bei niedrigen Temperaturen länger als bei hohen Temperaturen vorgegeben wird.

6. Verfahren nach einem der Ansprüche 1 bis 5, **dadurch gekennzeichnet, dass** der Schaltstrom (I1_{SH}, I1_{ST}) sprunghaft von einem Ausgangswert auf die erste Amplitude (A_{SH}, A_{ST}) erhöht wird.

7. Verfahren nach einem der Ansprüche 1 bis 6, **dadurch gekennzeichnet, dass** der Schaltstrom (I2_{SH}, I2_{ST}) stufenweise von einem Ausgangswert auf die erste Amplitude (A_{SH}, A_{ST}) erhöht wird.

8. Fluidsystem (1) mit mindestens einem Elektromagnetventil (10) und einer Auswerte- und Steuereinheit (20), eingerichtet zum Ansteuern des mindestens einen Elektromagnetventils (10)nach dem Verfahren gemäss Anspruch 1, welche für eine vorgegebene erste Zeitspanne (T_{H}, T_{T}) einen Schaltstrom (I1_{SH}, I2_{SH}, I1_{ST}, I2_{ST}) mit einer vorgegebenen ersten Amplitude (A_{SH}, A_{ST}) an das Elektromagnetventil (10) anlegt, welche das Elektromagnetventil (10) von einem Ruhezustand in einen Schaltzustand schaltet, wobei die Auswerte- und Steuereinheit (20) nach Ablauf der vorgegebenen ersten Zeitspanne (T_{H}, T_{T}) einen Haltestrom (I1_{HH}, I2_{HH}, I1_{HT}, I2_{HT}) mit einer vorgegebenen zweiten Amplitude (A_{HH}, A_{HT}) an das Elektromagnetventil (10) anlegt, welcher das Elektromagnetventil (10) im Schaltzustand hält, und wobei die erste Amplitude (A_{SH}, A_{ST}) des Schaltstroms (I1_{SH}, I2_{SH}, I1_{ST}, I2_{ST}) größer als die zweite Amplitude (A_{HH}, A_{HT}) des Haltestroms (I1_{HH}, I2_{HH}, I1_{HT}, I2_{HT}) ist, **dadurch gekennzeichnet, dass** die Auswerte- und Steuereinheit (20) die erste Amplitude (A_{SH}, A_{ST}) des Schaltstroms (I1_{SH}, I2_{SH}, I1_{ST}, I2_{ST}) und die zweite Amplitude (A_{HH}, A_{HT}) des Haltestroms (I1_{HH}, I2_{HH}, I1_{HT}, I2_{HT}) in Abhängigkeit von mindestens einer Temperaturinformation vorgibt.

9. Fluidsystem nach Anspruch 8, **dadurch gekennzeichnet, dass** die Auswerte- und Steuereinheit (20) die erste Zeitspanne (T_{H}, T_{T}) des Schaltstroms (I1_{SH}, I2_{SH}, I1_{ST}, I2_{ST}) in Abhängigkeit von der mindestens einen Temperaturinformation vorgibt.

10. Fluidsystem nach Anspruch 8 oder 9, **dadurch gekennzeichnet, dass** mindestens ein Temperatursensor (22) die mindestens eine Temperaturinformation zur Verfügung stellt, welche eine Information über eine Fluidtemperatur im Fluidsystem (1) und/oder eine Information über eine Umgebungstemperatur und/oder eine Information über eine Antriebsaggregattemperatur und/oder eine Information über eine Bauteiltemperatur umfasst.

11. Computerprogramm, welches eingerichtet ist, das Verfahren nach zumindest einem der Ansprüche 1 bis 7 auszuführen.

12. Maschinenlesbares Speichermedium, auf dem das Computerprogramm nach Anspruch 11 gespeichert ist.

## Claims

1. Method for actuating an electromagnetic valve (10) in a fluid system (1), wherein for a specified first period of time (T_{H}, T_{T}) a switching current (I1_{SH}, I2_{SH}, I1_{ST}, I2_{ST}) with a specified first amplitude (A_{SH}, A_{ST}) is applied, which switches the electromagnetic valve (10) from a rest state into a switched state, wherein following the expiry of the specified first period of time (T_{H}, T_{T}), a holding current (I1_{HH}, I2_{HH}, I1_{HT}, I2_{HT}) with a specified second amplitude (A_{HH}, A_{HT}) is applied, which holds the electromagnetic valve (10) in the switched state, wherein the first amplitude (A_{SH}, A_{ST}) of the switching current (I1_{SH}, I2_{SH}, I1_{ST}, I2_{ST}) is greater than the second amplitude (A_{HH}, A_{HT}) of the holding current (I1_{HH}, I2_{HH}, I1_{HT}, I2_{HT}), **characterized in that** the first amplitude (A_{SH}, A_{ST}) of the switching current (I1_{SH}, I2_{SH}, I1_{ST}, I2_{ST}) and the second amplitude (A_{HH}, A_{HT}) of the holding current (I1_{HH}, I2_{HH}, I1_{HT}, I2_{HT}) are specified as a function of at least one piece of temperature information.

2. Method according to Claim 1, **characterized in that** the first period of time (T_{H}, T_{T}) of the switching current (I1_{SH}, I2_{SH}, I1_{ST}, I2_{ST}) is specified as a function of at least one piece of temperature information.

3. Method according to Claim 1 or 2, **characterized in that** the at least one piece of temperature information comprises information about a fluid temperature in the fluid system (1) and/or information about an ambient temperature and/or information about a drive unit temperature and/or information about a component temperature.

4. Method according to any one of Claims 1 to 3, **characterized in that** the first amplitude (A_{SH}, A_{ST}) of the switching current (I1_{SH}, I2_{SH}, I1_{ST}, I2_{ST}) and the second amplitude (A_{HH}, A_{HT}) of the holding current (I1_{HH}, I2_{HH}, I1_{HT}, I2_{HT}) are each specified with higher values for low temperatures than for high temperatures.

5. Method according to any one of Claims 2 to 4, **characterized in that** the first period of time (T_{H}, T_{T}) of the switching current (I1_{SH}, I2_{SH}, I1_{ST}, I2_{ST}) for low temperatures is specified to be longer than for high temperatures.

6. Method according to any one of Claims 1 to 5, **characterized in that** the switching current (I1_{SH}, I1_{ST}) is increased rapidly from an initial value to the first amplitude (A_{SH}, A_{ST}).

7. Method according to any one of Claims 1 to 6, **characterized in that** the switching current (I2_{SH}, I2_{ST}) is increased in stages from an initial value to the first amplitude (A_{SH}, A_{ST}).

8. Fluid system (1) with at least one electromagnetic valve (10) and an analysis and control unit (20), designed for actuating the at least one electromagnetic valve (10) according to the method according to Claim 1, which for a specified first period of time (T_{H}, T_{T}) applies a switching current (I1_{SH}, I2_{SH}, I1_{ST}, I2_{ST}) with a specified first amplitude (A_{SH}, A_{ST}) to the electromagnetic valve (10), which switches the electromagnetic valve (10) from a rest state into a switched state, wherein following the expiry of the specified first period of time (T_{H}, T_{T}), the analysis and control unit (20) applies a holding current (I1_{HH}, I2_{HH}, I1_{HT}, I2_{HT}) with a specified second amplitude (A_{HH}, A_{HT}) to the electromagnetic valve (10), which holds the electromagnetic valve (10) in the switched state, and wherein the first amplitude (A_{SH}, A_{ST}) of the switching current (I1_{SH}, I2_{SH}, I1_{ST}, I2_{ST}) is greater than the second amplitude (A_{HH}, A_{HT}) of the holding current (I1_{HH}, I2_{HH}, I1_{HT}, I2_{HT}), **characterized in that** the analysis and control unit (20) specifies the first amplitude (A_{SH}, A_{ST}) of the switching current (I1_{SH}, I2_{SH}, I1_{ST}, I2_{ST}) and the second amplitude (A_{HH}, A_{HT}) of the holding current (I1_{HH}, I2_{HH}, I1_{HT}, I2_{HT}) as a function of at least one piece of temperature information.

9. Fluid system according to Claim 8, **characterized in that** the analysis and control unit (20) specifies the first period of time (T_{H}, T_{T}) of the switching current (I1_{SH}, I2_{SH}, I1_{ST}, I2_{ST}) as a function of the at least one piece of temperature information.

10. Fluid system according to Claim 8 or 9, **characterized in that** at least one temperature sensor (22) provides the at least one piece of temperature information, which comprises information about a fluid temperature in the fluid system (1) and/or information about an ambient temperature and/or information about a drive unit temperature and/or information about a component temperature.

11. Computer program that is arranged to carry out the method according to at least one of Claims 1 to 7.

12. Machine-readable memory medium, on which the computer program according to Claim 11 is stored.

## Revendications

1. Procédé d'activation d'une soupape électromagnétique (10) dans un système fluidique (1), dans lequel on applique pendant un premier laps de temps prédéterminé (T_{H}, T_{T}) un courant de commutation (I1_{SH}, I2_{SH}, I1_{ST}, I2_{ST}) avec une première amplitude prédéterminée (A_{SH}, A_{ST}), qui commute la soupape électromagnétique (10) d'un état de repos à un état commuté, dans lequel on applique après l'expiration du premier laps de temps prédéterminé (T_{H}, T_{T}) un courant d'arrêt (I1_{HH}, I2_{HH}, I1_{HT}, I2_{HT}) avec une seconde amplitude prédéterminée (A_{HH}, A_{HT}), qui maintient la soupape électromagnétique (10) dans l'état commuté, dans lequel la première amplitude (A_{SH}, A_{ST}) du courant de commutation (I1_{SH}, I2_{SH}, I1_{ST}, I2_{ST}) est plus grande que la seconde amplitude (A_{HH}, A_{HT}) du courant d'arrêt (I1_{HH}, I2_{HH}, I1_{HT}, I2_{HT}), **caractérisé en ce que** la première amplitude (A_{SH}, A_{ST}) du courant de commutation (I1_{SH}, I2_{SH}, I1_{ST}, I2_{ST}) et la seconde amplitude (A_{HH}, A_{HT}) du courant d'arrêt (I1_{HH}, I2_{HH}, I1_{HT}, I2_{HT}) sont prédéterminées en fonction d'au moins une information de température.

2. Procédé selon la revendication 1, **caractérisé en ce que** le premier laps de temps (T_{H}, T_{T}) du courant de commutation (I1_{SH}, I2_{SH}, I1_{ST}, I2_{ST}) est prédéterminé en fonction d'au moins une information de température.

3. Procédé selon une revendication 1 ou 2, **caractérisé en ce que** ladite au moins une information de température comprend une information sur une température de fluide dans le système fluidique (1) et/ou une information sur une température ambiante et/ou une information sur une température du groupe d'entraînement et/ou une information sur une température de composant.

4. Procédé selon l'une quelconque des revendications 1 à 3, **caractérisé en ce que** la première amplitude (A_{SH}, A_{ST}) du courant de commutation (I1_{SH}, I2_{SH}, I1_{ST}, I2_{ST}) et la seconde amplitude (A_{HH}, A_{HT}) du courant d'arrêt (I1_{HH}, I2_{HH}, I1_{HT}, I2_{HT}) sont prédéterminées avec des valeurs respectivement plus élevées à de basses températures qu'à de hautes températures.

5. Procédé selon l'une quelconque des revendications 2 à 4, **caractérisé en ce que** le premier laps de temps (T_{H}, T_{T}) du courant de commutation (I1_{SH}, I2_{SH}, I1_{ST}, I2_{ST}) est prédéterminé avec une durée plus longue à de basses températures qu'à de hautes températures.

6. Procédé selon l'une quelconque des revendications 1 à 5, **caractérisé en ce que** l'on augmente le courant de commutation (I1_{SH}, I1_{ST}) brusquement d'une valeur initiale à la première amplitude (A_{SH}, A_{ST}).

7. Procédé selon l'une quelconque des revendications 1 à 6, **caractérisé en ce que** l'on augmente le courant de commutation (I2_{SH}, I2_{ST}) par paliers d'une valeur initiale à la première amplitude (A_{SH}, A_{ST}).

8. Système fluidique (1) avec au moins une soupape électromagnétique (10) et une unité d'évaluation et de commande (20), conçue pour activer ladite au moins une soupape électromagnétique (10) par le procédé selon la revendication 1, qui applique pendant un premier laps de temps prédéterminé (T_{H}, T_{T}) un courant de commutation (I1_{SH}, I2_{SH}, I1_{ST}, I2_{ST}) avec une première amplitude prédéterminée (A_{SH}, A_{ST}) à la soupape électromagnétique (10), qui commute la soupape électromagnétique (10) d'un état de repos à un état commuté, dans lequel l'unité d'évaluation et de commande (20) applique après l'expiration du premier laps de temps prédéterminé (T_{H}, T_{T}) un courant d'arrêt (I1_{HH}, I2_{HH}, I1_{HT}, I2_{HT}) avec une seconde amplitude prédéterminée (A_{HH}, A_{HT}) à la soupape électromagnétique (10), qui maintient la soupape électromagnétique (10) dans l'état commuté, et dans lequel la première amplitude (A_{SH}, A_{ST}) du courant de commutation (I1_{SH}, I2_{SH}, I1_{ST}, I2_{ST}) est plus grande que la seconde amplitude (A_{HH}, A_{HT}) du courant d'arrêt (I1_{HH}, I2_{HH}, I1_{HT}, I2_{HT}), **caractérisé en ce que** l'unité d'évaluation et de commande (20) prédétermine la première amplitude (A_{SH}, A_{ST}) du courant de commutation (I1_{SH}, I2_{SH}, I1_{ST}, I2_{ST}) et la seconde amplitude (A_{HH}, A_{HT}) du courant d'arrêt (I1_{HH}, I2_{HH}, I1_{HT}, I2_{HT}) en fonction d'au moins une information de température.

9. Système fluidique selon la revendication 8, **caractérisé en ce que** l'unité d'évaluation et de commande (20) prédétermine le premier laps de temps (T_{H}, T_{T}) du courant de commutation (I1_{SH}, I2_{SH}, I1_{ST},I2_{ST}) en fonction de ladite au moins une information de température.

10. Système fluidique selon une revendication 8 ou 9, **caractérisé en ce qu'**au moins un capteur de température (22) fournit ladite au moins une information de température, qui comprend une information sur une température de fluide dans le système fluidique (1) et/ou une information sur une température ambiante et/ou une information sur une température du groupe d'entraînement et/ou une information sur une température de composant.

11. Programme informatique, qui est conçu pour exécuter le procédé selon au moins une des revendications 1 à 7.

12. Support de mémoire lisible à la machine, sur lequel le programme informatique selon la revendication 11 est mémorisé.
